# EUROPEAN PATENT SPECIFICATION

(11) **EP 2 848 318 B1**
(45) Date of publication and mention of the grant of the patent: **18.07.2018**
(21) Application number: 14181360.0
(22) Date of filing: 19.08.2014
(51) Int. Cl.: B05C 1/08, B05D 1/28, B41F 23/08, B41F 31/30, B41F 31/32, B41F 9/18

(54) **A machine for transferring fluids to a moving belt and method of operation**
Vorrichtung zum Transport von Flüssigkeiten zu einem laufenden Band und Verfahren zum Betrieb
Machine permettant de transférer des fluides à une courroie mobile et procédé de fonctionnement

(30) Priority: 05.09.2013 IT VR20130210
(43) Date of publication of application: 18.03.2015
(73) Proprietor: Zandonai, Albert, 38060 Villa Lagarina (Trento) (IT)
(72) Inventor: Rosa', Andrea, 38060 VILLA LAGARINA (Trento) (IT); Zandonai, Albert, 38060 VILLA LAGARINA (Trento) (IT)
(74) Representative: Lissandrini, Marco

(56) References cited:
- WO-A1-2013/125749
- JP-A- 2009 143 098
- JP-A- 2013 027 818
- US-A- 4 685 414
- US-A1- 2004 112 283
- US-A1- 2005 223 923
- US-A1- 2006 219 110
- US-A1- 2006 219 165

## Description

### Technical field

This invention addresses the sector of machines for transferring fluids to a web. More in detail, the invention addresses the sector of machines for transferring adhesive substances to a moving web.

This invention also relates to a method for transferring fluids to a web and describes a computer program designed to make the machine of the invention implement the method described.

### Background art

In prior art machines for transferring fluids to a moving web, a spreading roller is usually used which operates in contact with the web in order to transfer the fluid thereto.

In particular, for transferring paint, the spreading roller may be an "anilox" roller (typically made of ferrous - steel - or ceramic material) which is soaked with paint. A scraper blade, known as doctor blade, removes the excess paint from the roller. Typically, an anilox roller has a plurality of cells formed on the surface of it which are used for printing purposes. The smaller the cells are in size, the finer the detail of the paint transferred to the web.

In machines known up to the present, there is a tensioned web to which the spreading roller distributes the glue or paint. In these machines, the doctor blade is also used to transfer the glue or paint collected by a receptacle on the spreading roller. A plurality of distribution rollers (known in Italian by the term meaning "basket") define a path along which the web is wound and kept tensioned. The amount of glue or paint transferred is determined by the mutual position between the doctor blade and the spreading roller.

More specifically, in prior art machines, the basket is movable relative to both the spreading roller and the doctor blade and it moves between a first position, or operating position, where the web is in contact with the spreading roller, and a second position, or rest position, where it is away from the spreading roller. More specifically, when the basket is at the rest position, it is possible, for example, to change the web and, obviously, the fluid (glue or paint) is not transferred.

The movement of the distribution rollers, however, causes the web to stretch or lose its tension leading to operating problems such as creasing or non-uniform spreading of the fluid). Examples of these machines are disclosed by the following documents: US2006219110, WO2013125749, JP2013027818, JP2009143098, US2004112283 and US2006219165. This invention has for an aim to provide a machine for transferring fluids to a web and which contributes to overcoming the above mentioned disadvantages.

More specifically, the aim of this invention is to provide a machine for transferring fluids to a web and which allows preventing damage to the web during the passage from the operating position to the rest position and vice versa.

### Summary of the invention

According to this invention, there is provided a machine for transferring fluids to a moving web, comprising the features of claim 1. Advantageously, the machine also comprises the features of the dependent claims.

### Description of the drawings

Further features and details of a preferred, non-limiting embodiment of the machine and method for transferring fluids to a web appear in the description which follows with reference to the accompanying drawings, in which:
- Figure 1 shows a perspective view of the machine of the invention;
- Figure 2 shows a lateral cross sectional view of a first operating configuration of a machine for transferring fluids to a web according to this invention;
- Figure 3 shows a lateral cross sectional view of the machine of Figure 1 in a rest configuration;
- Figure 4 shows a lateral cross sectional view of the machine of the invention in a further configuration where the protection elements are moved in order to keep a web separate from a spreading roller; and
- Figure 5 shows a lateral cross sectional view of the machine of the invention in a further configuration where a spreading roller is moved.

### Detailed description of the invention

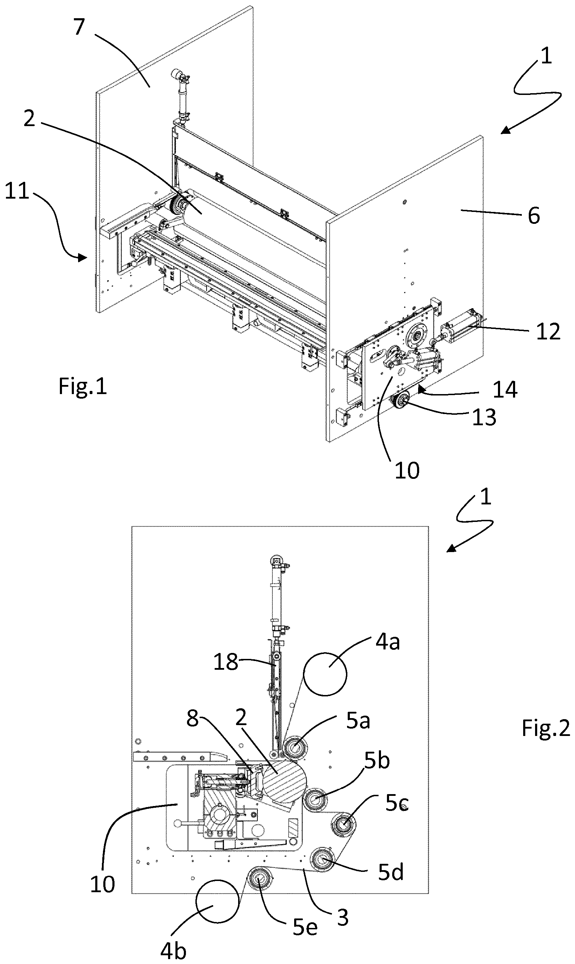

With reference to Figures 1 and 2, the reference numeral 1 denotes in its entirety a machine for transferring fluids to a web. More in detail, the machine 1 is configured to transfer paint to a moving web and is designed to transfer not only paints but also glue from a spreading roller, also called "anilox" roller, 2 to a moving web 3 which, in use, is unwound from a first loading drum 4a and rewound onto a second drum 4b. More specifically, the moving web 3 is made to slide on a plurality of distribution rollers 5a-5e which make the web follow a curvilinear path. Although the accompanying drawings show five distribution rollers, the number and specific configuration of the distribution rollers should not be viewed as limiting the invention. In the same way, the configuration of the first and second drums 4a, 4b should not be viewed as limiting the invention, since other convenient assembly solutions are imaginable. The configuration of the first and second drums appearing in the accompanying drawings is therefore purely exemplary and the two drums are represented in those positions solely for completeness of illustration.

The surface of the spreading roller 2 is dimpled which means, more in detail, that it has a plurality of cells adapted to contain a printing fluid or, advantageously according to this invention, a glue or adhesive substance. The smaller the cells are in size, the greater the printing resolution obtained. The size of the cells also determines the quantity of fluid transferred from the spreading roller to the moving web. The spreading roller is preferably, but not necessarily, made of steel or of ceramic material.

More specifically, the machine of the invention is characterized by a spreading system, known in the jargon of the trade as "chamber doctor blade" system, where the quantity of fluid to be applied to the web is determined by the spreading roller 2 and, partly, by the clearance between the roller and the moving web. The chamber doctor blade system takes its name from a doctor blade commonly used to remove excess paint or ink from the spreading roller 2, and which, in this invention, is advantageously also used to distribute adhesive substances.

The moving web 3 is moved by the active rotation of at least one between the first drum 4a and the second drum 4b. Conveniently, if both drums 4a, 4b are actively rotated, for example by respective motors, they are provided with means for adjusting the rotational synchronism so that the moving web 3 is always kept tensioned to the optimum extent independently of the amount of it that is wound around the drum.

The means for adjusting the synchronism are preferably controlled by a data processing unit installed on the machine 1 and whose purpose is to supervise all the operating steps of the machine. Conveniently, the data processing unit is electrically connected to a non-volatile storage medium containing software or firmware for managing machine operation and to user interface devices to allow displaying one or more machine operating states and entering operating commands. The data processing unit may, for example, without limiting the invention, comprise a PLC controller, but this may be technically and equivalently substituted for an electronic processor equipped with at least one general purpose processor configured to run a program which causes the machine to operate in the manner described hereinafter. Thus, the electronic processor may also be a personal computer installed outside the box or frame of the machine of this invention.

A distinctive feature of the machine 1 of the invention is that the distribution rollers 5, although they rotate on respective pins, are fixedly positioned relative to a first and a second shoulder 6, 7 of the machine 1. The first and second shoulders 6, 7 of the machine 1 are part of a mounting frame of the machine 1.

More in detail, the first and second shoulders 6, 7 are positioned on the left and right of the machine, respectively, and act as vertical supporting elements for a pair of carriages, described in more detail below, which act as support at least for the pin of the spreading roller 2. Since the shoulders 6, 7 are in turn fixed to the rest of the frame of the machine 1, the distribution rollers do not vary their position relative to the machine. The axes of rotation of all the distribution rollers 5a-5e and of the spreading roller are all parallel. This parallelism is very important to guarantee the absence of creases on the web 3 and to ensure that the fluid is distributed uniformly.

In the machine of this invention, therefore, it is the spreading roller 2 that is movable, as is a doctor blade 8, whose purpose is to transfer a fluid - be it an adhesive substance (glue) or a paint - from a receptacle forming part of the chamber doctor blade system to the spreading roller 2 and if necessary, to reduce the excess fluid present thereon, thus constituting a metering system for obtaining a precise quantity of fluid on the spreading roller 2.

More in detail, the machine 1 of the invention comprises a pair of carriages 10, 11 mounted externally of the first and second shoulder 6, 7, respectively, and configured to constrain an assembly made up of the spreading roller 2 and the doctor blade 8. More specifically, the carriages 10, 11, which are of generally rectangular shape, lie in a plane substantially parallel to the plane defined by the main surface of the respective first and second shoulder 6, 7 and run linearly relative to the first and the second shoulder 6, 7, being limited in their movement by rails made on the shoulders and being driven by a respective linear actuator 12 which, in use, is preferably, but not necessarily, embodied by a hydraulic piston.

If present, limit sensors are located at the first and second shoulders in such a way as to allow identifying the position of the carriages precisely. These sensors, if present, are electrically connected to the data processing unit of the machine 1, so that the position of the carriages can be automatically acquired.

Under each carriage 10, 11 there is a gear 13 which is pivoted to the respective shoulder in such a way as to project outwardly from the shoulder itself. This gear meshes with a rack 14 located on the underside of each carriage and advantageously allows the carriage to move more smoothly than it would if the gear were not fitted. In effect, without the gear, the considerable distance between the two shoulders, dictated by the width of the spreading roller 2 and the weight of the assembly composed of the latter and the doctor blade 8, would very probably lead to jerky movements. This is due partly also to the considerable length that the spreading roller 2 may have in large machines.

The machine of the invention also comprises at least one protection element for protecting the spreading roller 2 and the web 3 from each other. The protection element comprises a pair of covering elements 16, 17 driven, in use, by respective actuating means. The first and second covering elements 16, 17 are both movable between a first, rest position and a second, use or safety position. In the first, rest position, they do not interfere with the transfer of fluid from the spreading roller 2 to the moving web 3, whereas in the second, safety position, they are at least partly interposed between the spreading roller 2 and the portion of the moving web 3 in front of it, in order to protect the web from the selfsame spreading roller. In effect, under certain operating conditions, there may be air flows which would cause the moving web 3 to bend or swing to such an extent as to cause it to come into contact with the spreading roller 2 at times when there should not be any such contact (when the spreading roller 2 is at the rest position). The first and second covering elements also guarantee greater safety for the operator, in particular when loading the web into the machine, because it prevents the operator from coming into contact with the spreading roller. More in detail, the covering means comprise a first portion 16 which is above the second and which is slidable vertically and rotatable on a pin located at one end of it, and a second movable portion which, when in the safety position, is interposed between the spreading roller and the web. The movement of the second, movable or active portion 17 is determined preferably by the user entering a specific command from the user interface means connected to the data processing unit which sends a signal for moving the second active portion by driving the actuating means thereof and causing the second active portion to move from the first to the second position. A further command for returning to the working condition, on the other hand, will cause a signal for moving the covering elements to be transmitted by the data processing unit to the actuating means to return the second portion 17 to the first, rest position. Limit sensors are electrically connected to the data processing unit to indicate that the second portion 17 has stopped correctly at the respective first or second position.

In use, as illustrated in Figure 2, during the normal operation of the machine 1 (operating configuration), the spreading roller 2 is at a working position and is in contact with the moving web 3 to transfer to it the adhesive (glue) or paint, whose quantity depends on the surface structure of the spreading roller 2 (more in detail, on the shape and/or number of the cells on the anilox roller) and/or on the rotation speed of the spreading roller 2.

The second portion 17 of the covering elements is held in a raised position on a column 18 of the machine 1.

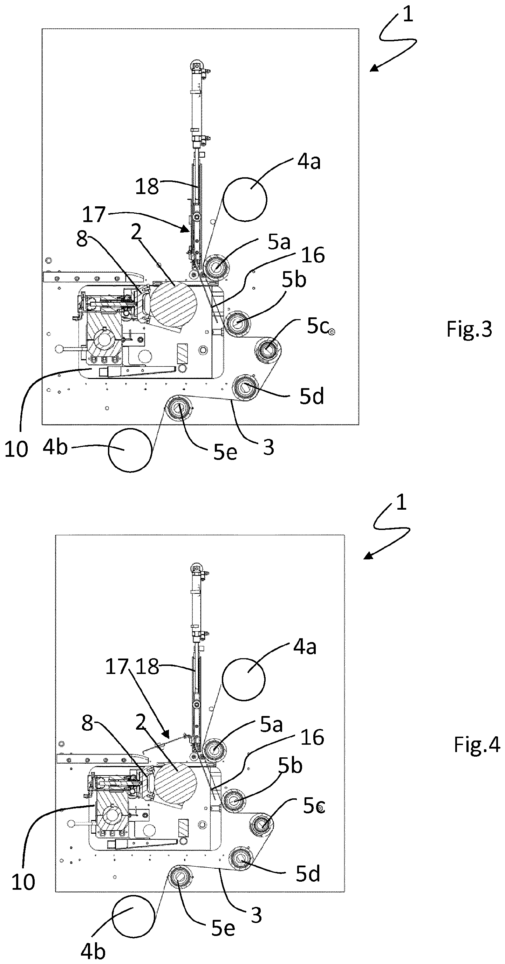

The machine 1 can be controlled through the user interface means to activate a rest configuration, illustrated in Figure 3, where the data processing unit sends a drive signal for moving the linear actuators 12 of the carriages. Conveniently, the linear actuators are preferably hydraulic, the drive signal activates, for example, an electric/hydraulic servoactuator system connected to the linear actuators 12. In the rest configuration, the spreading roller 2-doctor blade 8 assembly is linearly translated towards a rear portion of the machine of the invention. When the limit sensors detect that the spreading roller 2-doctor blade 8 assembly has correctly reached the rest position, they transmit an electric signal to the data processing unit and the machine control software activates the actuating means for lowering the second portion 17 of the covering elements. As illustrated in Figure 4, only at this point is the first portion 16 of the covering elements made to move translationally so that one end of it comes to rest on one edge of the machine frame to protect the top of the spreading roller 2. The translational movement of the first portion 16 of the covering elements may be performed automatically when the spreading roller 2-doctor blade 8 assembly reaches the rest position or, alternatively, it may be activated by the user with a separate command.

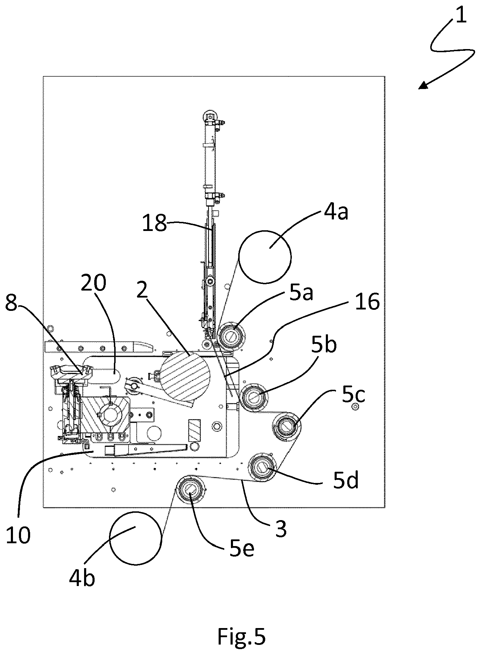

As illustrated in Figure 4, the machine 1 of the invention also comprises a configuration for changing the spreading roller 2. In this configuration, which can be conveniently activated by the user through the aforementioned user interface means, the data processing unit activates a drive signal for moving the closed chamber doctor blade system, which is pivoted on a respective rotation pin 20. In this configuration, the closed chamber system which comprises the doctor blade 8 is automatically rotated by respective rotation means in order to release the spreading roller 2 so it can be extracted from the machine 1. More specifically, Figure 5 shows a rotation by 90° in an anticlockwise direction but this must not be considered as limiting the invention, since other equivalent solutions comprise a rotation through a different angle or a rototranslation of the closed chamber system relative to the roller.

The advantages of the machine 1 of the invention are evident in light of the foregoing description. More in detail, since the spreading roller 2 is installed on an assembly which is movable independently of the plurality of distribution rollers and mounted on carriages which are not rigidly connected to the frame of the machine 1, the spreading roller 2 is advantageously subject to less vibration. In effect, the non-rigid connection between the spreading roller and the machine frame dampens the detrimental vibrations that would otherwise be imparted to the spreading roller, thus improving the quality of fluid distribution on the web. Advantageously, also, the spreading roller 2 can be changed more quickly, which allows the machine to work more rapidly in diverse operating conditions where the spreading roller needs to be changed on account of changes in the quantity of fluid required.

Advantageously, the moving web 3 follows a fixed path since the distribution roller assembly is rigidly connected to the machine. Consequently, there is less risk of sudden variations in the tensioning force applied to the web, with obvious advantages in terms of improved quality of printing or transfer of the fluids from the roller to the web. In both the rest configuration and in the use or operating configuration, the machine of the invention does not change either the path or the tension of the moving web 3.

It will be understood that the machine 1 of this invention can be modified or adapted in several ways, obvious to an expert in the trade, without thereby departing from the scope of protection offered by the accompanying claims.

## Claims

1. A machine (1) for transferring adhesive substances to a moving web (3), comprising:
- a spreading roller (2) by which the adhesive substances are spread and which is configured to come into contact, at least temporarily, with the moving web (3); wherein the spreading roller (2) is an "anilox" roller;
- a plurality of distribution rollers (5a-5e) on which the web (3), which is subject to tensioning, is made to run;
- and a transfer system (8) for transferring adhesive substances to the spreading roller (2); the machine (1) comprising motor-driven means connected to at least one pin of the spreading roller (2) in order to rotate it; the plurality of distribution rollers (5a-5e) is rotatably pivoted on fixedly pins relative to a first and a second lateral shoulder (6, 7) of the machine (1) and the spreading roller (2) is slidably constrained to the machine (1);
the spreading roller (2) extending between two opposite pins which are rotatably mounted on respective carriages (10, 11); the carriages (10, 11) being mounted on the first and second shoulders (6, 7) of the machine (1) and being movable relative to the first and second shoulders (6, 7) so as to move the spreading roller (2) towards and away from the distribution rollers (5a-5e);
**characterized in that** the pair of carriages (10, 11) movable relative to a pair of lateral shoulders (6, 7) is driven by respective actuator means; the transfer system (8) for transferring adhesive substances comprises a doctor blade mounted on the carriages (10, 11) to be moved together with the spreading roller (2); wherein the transfer system (8) for transferring adhesive substances is movable and comprises a doctor blade capable of adjusting the quantity of adhesive substances transferred to the spreading roller (2); the motor-driven means being mounted on at least one of the carriages (10, 11) in such a way as to follow the movement of the spreading roller (2) towards and away from the distribution rollers (5a-5e).

2. The machine according to claim 1, **characterized in that** it comprises limit sensors located at each shoulder (6, 7) and configured to identify the position of the carriages (10, 11); the limit sensors being connected to a central control unit configured to:
- detect, by means of the sensors, a predetermined limit position of the carriages (10, 11) along a direction towards or away from the distribution rollers (5a-5e);
- issue commands for stopping the actuating means of the carriages.

3. The machine according to any one of the preceding claims, **characterized in that** the carriages (10, 11) are movable along a substantially horizontal direction in such a way as to move the spreading roller (2) towards or away from an operator.

4. The machine according to any one of the preceding claims, further comprising movable protection means (16, 17) configured to be interposed at least partially - in a use position - between the spreading roller (2) and the web (3).

## Patentansprüche

1. Maschine (1) zum Übertragen von Klebestoffen zu einem laufenden Band (3), umfassend:
- eine Streuwalze (2), mit der die Klebestoffe verteilt werden und die so konfiguriert ist, dass sie zumindest zeitweise mit dem laufenden Band (3) in Kontakt kommt; wobei die Streuwalze (2) eine "Rasterwalze" ist;
- eine Vielzahl von Verteilwalzen (5a-5e), auf denen das der Spannung unterliegende Band (3) zum Laufen gebracht wird;
und ein Übertragungssystem (8) zum Übertragen von Klebstoffen zu der Streuwalze (2); wobei die Maschine (1) motorisch angetriebene Mittel umfasst, die mit mindestens einem Stift der Streuwalze (2) verbunden sind, um sie zu drehen;
die Vielzahl von Verteilwalzen (5a-5e) relativ zu einer ersten und einer zweiten seitlichen Schulter (6, 7) der Maschine (1) auf feststehenden Stiften drehbar gelagert ist und die Streuwalze (2) verschiebbar an der Maschine (1) befestigt ist;
die Streuwalze (2) sich zwischen zwei gegenüberliegenden Stiften erstreckt, die drehbar an jeweiligen Wagen (10, 11) gelagert sind; wobei die Wagen (10, 11) an der ersten und zweiten Schulter (6, 7) der Maschine (1) angebracht sind und relativ zu der ersten und zweiten Schulter (6, 7) bewegbar sind, um die Streuwalze (2) zu den Verteilwalzen (5a-5e) hin und von diesen weg zu bewegen;
**dadurch gekennzeichnet, daß** das Paar von Wagen (10, 11), die relativ zu einem Paar von seitlichen Schultern (6, 7) bewegbar sind, durch entsprechende Betätigungsmittel angetrieben wird; das Übertragungssystem (8) zum Übertragen von Klebestoffen ein Rakelmesser umfasst, das an den Wagen (10, 11) angebracht ist, die zusammen mit der Spreizwalze (2) bewegt werden sollen; wobei das Übertragungssystem (8) zum Übertragen von Klebstoffen bewegbar ist und ein Rakelmesser umfasst, das die Menge der zu der Streuwalze (2) übertragenen Klebstoffen einstellen kann; wobei die motorisch angetriebenen Mittel an mindestens einem der Wagen (10, 11) derart angebracht sind, dass sie der Bewegung der Streuwalze (2) zu den Streuwalzen (5a-5e) hin und von diesen weg folgen.

2. Maschine nach Anspruch 1, **dadurch gekennzeichnet, dass** sie an jeder Schulter (6, 7) angeordnete und zur Erkennung der Position der Wagen (10, 11) konfigurierte Endlagensensor aufweist, wobei die Endlagensensor mit einer zentralen Steuereinheit verbunden sind, die konfiguriert ist, um:
mit Hilfe der Sensoren eine vorgegebene Endlage der Wagen (10, 11) entlang einer Richtung zu den oder weg von den
Verteilwalzen (5a-5e) zu erfassen;
- Befehle zum Anhalten der Betätigungsmittel der Wagen auszugeben.

3. Maschine nach einem der vorhergehenden Ansprüche, **dadurch gekennzeichnet, dass** die Wagen (10, 11) entlang einer im wesentlichen horizontalen Richtung derart bewegbar sind, daß die Streuwalze (2) zu einem Bediener hin oder von ihm weg bewegbar sind.

4. Maschine nach einem der vorhergehenden Ansprüche, umfassend ferner bewegbare Schutzmittel (16, 17), die so konfiguriert sind, dass sie zumindest teilweise - in einer Gebrauchsstellung - zwischen der Streuwalze (2) und dem Band (3) angeordnet sind.

## Revendications

1. Machine (1) servant à transférer des substances adhésives à une bande mobile (3), comprenant :
- un rouleau d'enduction (2) par lequel les substances adhésives sont enduites et étant configuré pour se mettre en contact, au moins temporairement, avec la bande mobile (3) ; dans laquelle le rouleau d'enduction (2) est un rouleau distributeur ;
- une pluralité de rouleaux de distribution (5a-5e) sur lesquels la bande (3), soumise à une tension, circule ;
- et un système de transfert (8) servant à transférer des substances adhésives au rouleau d'enduction (2) ; la machine (1) comprenant des moyens motorisés reliés à au moins un axe du rouleau d'enduction (2) afin de le faire tourner ;
la pluralité de rouleaux de distribution (5a-5e) est montée pivotante de façon rotative sur des axes fixes par rapport à un premier et un second épaulement latéral (6, 7) de la machine (1) et le rouleau d'enduction (2) est solidaire de façon coulissante avec la machine (1) ;
le rouleau d'enduction (2) se prolongeant entre deux axes opposés étant montés en rotation sur des chariots respectifs (10, 11) ; les chariots (10, 11) étant montés sur les premier et second épaulements (6, 7) de la machine (1) et étant mobiles par rapport aux premier et second épaulements (6, 7) de sorte à rapprocher et à éloigner le rouleau d'enduction (2) des rouleaux de distribution (5a-5e) ;
**caractérisée en ce que** la paire de chariots (10, 11) mobiles par rapport à une paire d'épaulements latéraux (6, 7) est entraînée par des moyens actionneurs respectifs ; le système de transfert (8) servant à transférer des substances adhésives comprend une racle montée sur les chariots (10, 11) à déplacer avec le rouleau d'enduction (2) ; dans laquelle le système de transfert (8), servant à transférer des substances adhésives, est mobile et comprend une racle pouvant régler la quantité de substances adhésives transférée au rouleau d'enduction (2) ; les moyens motorisés étant montés sur au moins un des chariots (10, 11) de manière à suivre le rapprochement et l'éloignement du rouleau d'enduction (2) des rouleaux de distribution (5a-5e).

2. Machine selon la revendication 1, **caractérisée en ce qu'**elle comprend des détecteurs de fin de course situés en correspondance de chaque épaulement (6, 7) et configurés pour identifier la position des chariots (10, 11) ; les détecteurs de fin de course étant reliés à une unité de commande centrale configurée pour :
- détecter, au moyen de capteurs, une position de fin de course prédéterminée des chariots (10, 11) le long d'une direction se rapprochant ou s'éloignant des rouleaux de distribution (5a-5e) ;
- donner des commandes pour arrêter les moyens d'actionnement des chariots.

3. Machine selon l'une quelconque des revendications précédentes, **caractérisée en ce que** les chariots (10, 11) sont mobiles le long d'une direction substantiellement horizontale de manière à rapprocher ou éloigner le rouleau d'enduction (2) à partir d'un opérateur.

4. Machine selon l'une quelconque des revendications précédentes, comprenant de plus des moyens de protection mobiles (16, 17) configurés pour être interposés au moins partiellement, dans une position d'utilisation, entre le rouleau d'enduction (2) et la bande (3).
